# EUROPÄISCHE PATENTSCHRIFT

(11) **EP 3 742 051 B1**
(45) Veröffentlichungstag und Bekanntmachung des Hinweises auf die Patenterteilung: **25.01.2023**
(21) Anmeldenummer: 20171453.2
(22) Anmeldetag: 27.04.2020
(51) Int. Cl.: F24C 7/08, H04N 5/235, H04N 5/238

(54) **BELICHTUNGSREGELUNG VON GARGÜTERN**
LIGHTING CONTROL OF FOOD PRODUCTS
RÉGULATION DE L'EXPOSITION DES PRODUITS À CUIRE

(30) Priorität: 20.05.2019 DE 102019113281
(43) Veröffentlichungstag der Anmeldung: 25.11.2020
(73) Patentinhaber: Miele & Cie. KG, 33332 Gütersloh (DE)
(72) Erfinder: Stein, Karsten, 90419 Nürnberg (DE); Heimann, Thorsten Karl, 45478 Mülheim (DE); Bußmann, Arndt, 46485 Wesel (DE); Kersting, André, 59329 Wadersloh (DE); Lind, Martin, 33397 Rietberg (DE)

(56) Entgegenhaltungen:
- WO-A1-2018/033383
- US-A1- 2011 002 677

## Beschreibung

Die Erfindung betrifft ein Verfahren zur automatischen Belichtungsregelung in einem Haushaltsgerät mit einer integrierten Kamera, insbesondere von Gargütern in Garräumen von Gargeräten mit einer integrierten Kamera, sowie ein entsprechendes Gargerät.

Derzeit werden Kamerasysteme in vernetzten Hausgeräten integriert, um Bilder z.B. aus dem Garraum eines Backofens oder Innenraum eines Kühlschranks zu erfassen und an ein mobiles Endgerät (z. B. ein Smartphone) zu senden. Die Bilder werden in der Regel über ein lokales Netzwerk bzw. über einen Cloud-Server des Hausgeräte-Herstellers vom Hausgerät zum Endgerät übertragen. Die Bilder werden dann beispielsweise in einer speziellen App oder bei geräteseitig implementiertem Web-Server mittels Browser auf einem mobilen Endgerät angezeigt. Um die Aufnahme-Qualität an unterschiedliche Objekte anzupassen, muss die Belichtungszeit der Kamera entsprechend dem abzubildenden Objekt angepasst werden. Hier sind aus der digitalen Fotografie verschiedene Strategien bereits bekannt und finden dort Anwendung. Zu nennen sind hier mittenbetonte Belichtungsregelung, Spotmessung, etc.

Diese grundsätzlich bekannten Belichtungsregelungen sind im Garraum des Backofens zwar verwendbar, liefern aber häufig keine zufriedenstellenden Ergebnisse bzw. liefern nicht zuverlässig zufriedenstellende Ergebnisse. Das liegt darin begründet, dass ein Benutzer frei darin ist, wo im Garraum er das Gargut platziert und die minimale bzw. maximale Größe sowie die Form und Anzahl von Gargütern sehr variabel sein können. Im schlechtesten Fall wäre bei Anwendung herkömmlicher Belichtungsverfahren das eigentlich interessante Gargut überbelichtet und der nicht interessante Gargutträger, z.B. ein Backblech, optimal belichtet. Schlecht belichtete Bilder von Gargütern sind für den Benutzer im Gebrauch nachteilig, da er so beispielsweise den Gargrad im Verlauf eines Garprogramms nicht richtig erkennen kann. Weiterhin wird er von einem hochwertigen Gargerät mit einem integrierten Kamerasystem eine optimale Bildqualität erwarten, die mit herkömmlichen Belichtungsverfahren allerdings nicht zuverlässig sicherzustellen ist.

Stand der Technik ist den Dokumenten WO2018033383 und US2011002677 zu entnehmen.

Der Erfindung stellt sich somit das Problem, ein verbessertes Belichtungsverfahren für ein Gargerät mit einer Kamera bereitzustellen. Erfindungsgemäß wird dieses Problem durch ein Verfahren sowie ein Gargerät gemäß den unabhängigen Ansprüchen gelöst. Vorteilhafte Ausgestaltungen und Weiterbildungen der Erfindung ergeben sich aus den abhängigen Ansprüchen.

Gemäß einem ersten Aspekt wird ein Verfahren zur Belichtungsregelung in einem Gargerät mit einer integrierten Kamera bereitgestellt, umfassend:
- Aufnehmen eines Startbilds mit einer vorgegebenen Grundbelichtungszeit;
- Segmentieren des Startbilds in Gargut-Flächenanteile und Nicht-Gargut-Flächenanteile;
- Erstellen einer Belichtungs-Maske für die Gargut-Flächenanteile, welche die Nicht-Gargut-Flächenanteile ausblendet;
- Anpassen der Belichtungszeit unter Verwendung der Belichtungs-Maske, so dass eine vorgegebene Zielhelligkeit der Gargut-Flächenanteile erreicht wird; und
- Aufnehmen eines Zielbilds mit der angepassten Belichtungszeit.

Hiermit kann sichergestellt werden, dass Gargüter korrekt belichtet werden, unabhängig davon, wo der Benutzer das Gargut im Garraum/auf dem Gargutträger platziert, und welchen Gargutträger er verwendet. Auch die Verwendung von Backpapier, Backfolien und dergleichen, die normalerweise aufgrund ihrer Farbe die Belichtung beeinflussen können, kann hiermit kompensiert werden.

Zur Segmentierung in Gargut-Flächenanteile und Nicht-Gargut-Flächenanteile gibt es verschiedene Möglichkeiten, die einzeln oder in beliebiger Kombination verwendet werden können:
- Randerkennung, um einfach zusammenhängende Gebiete zu erkennen;
- Berücksichtigung von Farbwerten, wobei Gebiete ähnlicher Farbe bevorzugt als zusammenhängende Gebiete eingestuft werden;
- Berücksichtigung einfach zusammenhängender Gebiete, wobei einfach zusammenhängende Gebiete bevorzugt als Gargut-Flächenanteile eingestuft werden und nicht einfach zusammenhängende Gebiete bevorzugt als Nicht-Gargut-Flächenanteile eingestuft werden;
- Berücksichtigung des Abstands von Gebieten von der Mitte und/oder dem Rand des Gargutträgers, wobei Gebiete in der Mitte bevorzugt als Gargut-Flächenanteile eingestuft werden und Flächenanteile am Rand bevorzugt als Nicht-Gargut-Flächenanteile eingestuft werden;
- Berücksichtigen der Form und Farbe bekannter Gargutträger, wobei Gebiete mit dieser Form und Farbe bevorzugt als Nicht-Gargut-Flächenanteile eingestuft werden;
- Erkennung von Objektstrukturen im Bild und dadurch Unterscheidung zu weniger strukturierten Nicht-Gargut-Flächenanteilen (z.B. mathematische Ableitung des Bildes).

In einer beispielhaften Ausführungsform kann das Segmentieren folgendermaßen erfolgen: Ein Rand- bzw. Kantenoperator erzeugt eine Maske, wobei mit an sich bekannten Methoden die Ränder bzw. Kanten im Bild erkannt werden, etwa durch Helligkeitssprünge/Farbwechsel an Rändern von Objekten. Diese werden dann weichgezeichnet, und die weichgezeichneten Konturen werden mit einem Dilatationsoperator zu größeren Figuren geschlossen.

Viele Gargüter wie etwa Braten, Kuchen und dergleichen bilden einfach zusammenhängende Gebiete. Daher können einfach zusammenhängende Gebiete, die sich in der Mitte bzw. in Abstand zum Rand des Garraums/Gargutträgers befinden, bevorzugt als Gargut-Flächenanteile erkannt werden. Umgekehrt kann etwa ein nicht einfach zusammenhängendes Gebiet, das sich bis an den Rand vom Garraum/Gargutträger erstreckt, bevorzugt als Nicht-Gargut-Flächenanteil erkannt werden. Ausnahmen bilden Gargüter, die nicht einfach zusammenhängend sind, wie beispielsweise Donuts, Brezeln und dergleichen. Dies kann beispielsweise durch zusätzliche Berücksichtigung der Position, also eher am Rand oder eher in der Mitte, ausgeglichen werden. Oder es kann die Kombination aus einem innenliegenden einfach zusammenhängenden Gebiet mit einem äußeren, nicht einfach zusammenhängenden Gebiet, die beide zusammen wiederum ein einfach zusammenhängendes Gebiet bilden, bevorzugt als Gargut-Flächenanteil erkannt werden.

Das Anpassen der Belichtungszeit umfasst:
- Ermitteln eines ersten Durchschnittshelligkeitswerts der Bildpunkte der Gargut-Flächenanteile; und
- Ermitteln, abhängig von der Grundbelichtungszeit und dem ersten Durchschnittshelligkeitswert, der Belichtungszeit für die vorgegebene Zielhelligkeit.

Dies kann beispielsweise über eine Look-Up-Table (LUT) erfolgen, die Belichtungszeiten und Zielhelligkeiten verknüpft.

In einer bevorzugten Ausführungsform werden die Bildpunkte der Gargut-Flächenanteile, deren Helligkeit außerhalb eines vorgegebenen Helligkeitsbereich liegt, beim Ermitteln des ersten Durchschnittshelligkeitswerts nicht berücksichtigt werden.

Damit kann erreicht werden, dass bereits in der Grundbelichtung des Startbilds über- oder unterbelichtete Bildpunkte die weitere Verarbeitung nicht verfälschen. Diese Bildpunkte werden daher beim Ermitteln des ersten Durchschnittshelligkeitswerts nicht berücksichtigt.

In einer bevorzugten, alternativen Ausführungsform umfasst das Verfahren weiter:
- Vorgeben der Zielhelligkeit in Abhängigkeit von dem ersten Durchschnittshelligkeitswert.

Hiermit kann zwischen hellen (Muffins, Kuchenteig, Auflauf) und dunklen Gargütern (Schokokuchen, Braten) unterschieden werden. Abhängig davon, ob es sich um helle oder dunkle Gargüter handelt, können angepasste Zielhelligkeiten vorgegeben werden. Dadurch wird verhindert, dass Gargüter aufgrund ihrer Farbe über- oder unterbelichtet werden.

In einer bevorzugten Ausführungsform umfasst das Verfahren weiter:
- Ermitteln eines zweiten Durchschnittshelligkeitswerts der Bildpunkte der Nicht-Gargut-Flächenanteile; und
- Vergleichen des ersten mit dem zweiten Durchschnittshelligkeitswert und Vorgeben der Zielhelligkeit in Abhängigkeit davon.

Durch diesen Vergleich ist eine noch genauere Unterscheidung zwischen hellen und dunklen Gargütern möglich. Diese Ausführung ist jedoch abhängig von der Art und Farbe der Nicht-Gargut-Flächenanteile, daher funktioniert sie am besten, wenn die Farbe der Nicht-Gargut-Flächenanteile, also von Garraum oder Gargutträger, bekannt ist. Bei zum Haushaltsgerät zugehörigen Gargutträgern wie Blechen und Rosten ist dies einfach zu gewährleisten.

In einer bevorzugten Ausführungsform werden die Schritte des Anpassens der Belichtungszeit und Aufnehmens eines Zielbilds wiederholt, sofern die Ist-Helligkeit der Gargut-Flächenanteile des Zielbilds um mehr als einen Schwellenwert von der Zielhelligkeit abweicht.

Hiermit kann ein möglichst genaues Einhalten der vorgegebenen Zielhelligkeit erreicht werden. Alternativ kann zur Erhöhung der Geschwindigkeit des Verfahrens auf ein iteratives Annähern an die Zielhelligkeit verzichtet werden, wobei Abweichungen von der vorgegebenen Zielhelligkeit in Kauf genommen werden.

Gemäß einem weiteren Aspekt wird ein Gargerät bereitgestellt, umfassend:
- einen Garraum;
- eine integrierte Kamera, die dazu eingerichtet ist, Bilder vom Garraum aufzunehmen; und
- eine Steuereinheit, die mit der Kamera verbunden und dazu eingerichtet ist, ein Verfahren wie vorstehend beschrieben auszuführen.

In einer bevorzugten Ausführungsform ist der Garraum mit einer Tür verschließbar und die Steuereinheit weiter dazu eingerichtet, das Verfahren in Reaktion auf ein Schließen der Tür auszuführen.

Da ein Einstellen von Gargütern bei einem solchen Haushaltsgerät zwangsläufig mit dem Schließen (und ggf. vorherigen Öffnen) der Tür verbunden ist, bietet es sich an, das Verfahren von dem Schließen abhängig zu machen.

In einer bevorzugten Ausführungsform ist die Steuereinheit weiter dazu eingerichtet, in Reaktion auf den Start eines Garprogramms die angepasste Belichtungszeit zu speichern und während der Ausführung des Garprogramms die gespeicherte Belichtungszeit für weitere Bilder zu verwenden.

Alternativ oder zusätzlich kann der Start eines Garprogramms als Auslöser für das Verfahren genutzt werden. Auch eine Kombination ist möglich, etwa das Starten des Verfahrens durch Erkennen des Schließens der Tür, und das Speichern der erzeugten Belichtungs-Maske zur Verwendung während des Garprogramms. Während das Garprogramm ausgeführt wird, können Türöffnungen und -Schließungen für einen (Neu-) Start des Verfahrens genutzt werden. Alternativ kann unabhängig davon die gespeicherte Belichtungs-Maske während des gesamten Garprogramms beibehalten werden.

Ausführungsbeispiele der Erfindung sind in den Zeichnungen rein schematisch dargestellt und nachfolgend näher beschrieben. Es zeigt
- Figur 1: ein Flußdiagramm einer Ausführungsform des Verfahrens der Erfindung;
- Figur 2: eine schematische Darstellung einer Ausführungsform eines Haushaltsgeräts der Erfindung; und
- Figur 3: eine schematische Darstellung von Teilschritten einer Ausführungsform des Verfahrens der Erfindung.

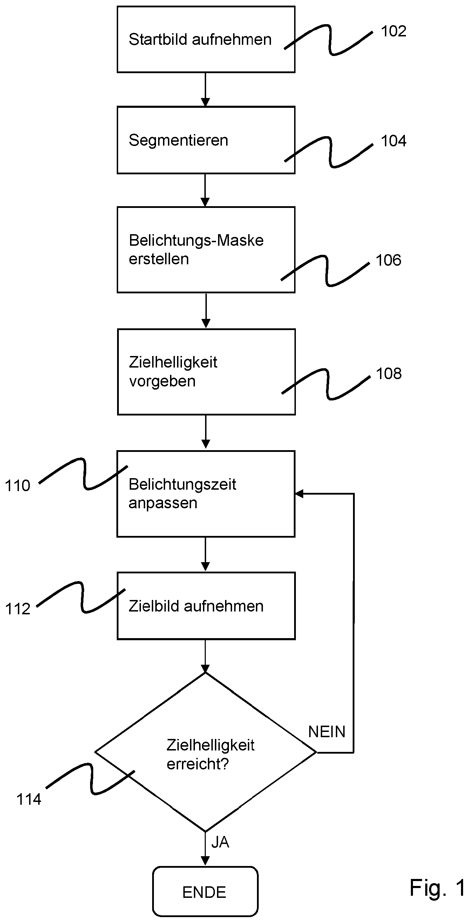

Figur 1 zeigt in Form eines Flussdiagramms Schritte einer Ausführungsform der Erfindung. In Schritt 102 wird ein Startbild des Garguts im Garraum bzw. auf dem Gargutträger (wie etwa einem Backbleck oder -Rost) mit einer Grundbelichtungszeit aufgenommen.

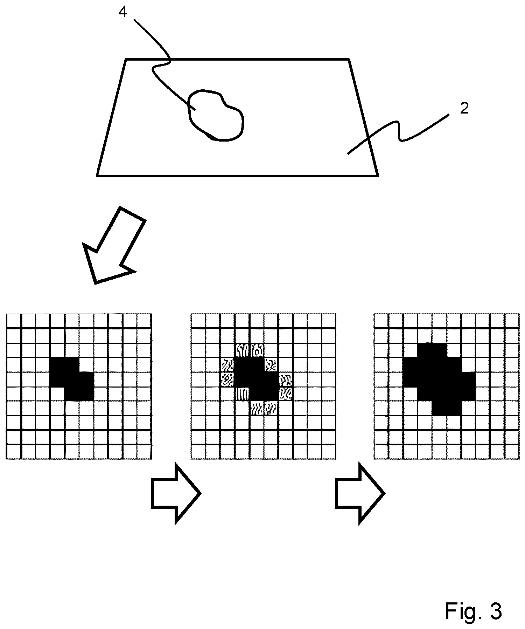

Im Schritt 104 wird an dem Startbild eine Segmentierung ausgeführt. Ziel der Segmentierung ist eine Aufteilung des Startbilds in Gargut-Flächenanteile und Nicht-Gargut-Flächenanteile. Für eine Segmentierung gibt es verschiedene Möglichkeiten, die einzeln oder in Kombination eingesetzt werden können. Eine bevorzugte Variante wird im Zusammenhang mit Figur 3 im Folgenden erläutert werden.

Im Schritt 106 wird basierend auf dem Ergebnis der Segmentierung eine Belichtungs-Maske für die Gargut-Flächenanteile erstellt, welche die Nicht-Gargut-Flächenanteile ausblendet.

Im Schritt 108 wird eine Zielhelligkeit vorgegeben. Diese kann optional davon abhängig gemacht werden, ob es sich bei den Gargut-Flächenanteilen um helle oder dunkle Gargüter handelt. Die Unterscheidung in hell oder dunkel kann basierend auf einem absoluten Helligkeitswert der Gargut-Flächenanteile oder auf einer Helligkeitsdifferenz zwischen Gargut-Flächenanteilen und Nicht-Gargut-Flächenanteile erfolgen. Die Vorgabe kann hier durch die Selektion aus einer Look-Up-Table (LUT) erfolgen.

Im Schritt 110 wird die Belichtungszeit unter Verwendung der Belichtungs-Maske angepasst, so dass die vorgegebene Zielhelligkeit der Gargut-Flächenanteile erreicht wird. Dies kann mittels Berechnung/Extrapolation bei bekannter Abhängig von Helligkeit und Belichtungszeit oder mittels einer Look-Up-Table (LUT) erfolgen.

Im Schritt 112 wird ein Zielbild mit der angepassten Belichtungszeit aufgenommen. In einer einfachen Variante kann das Verfahren bereits hiermit beendet werden, d.h. das Zielbild wird im Weiteren verwendet, z.B. auf einem Mobilgerät des Benutzers und/oder dem Display des betreffenden Haushaltsgeräts angezeigt.

In einer optionalen Variante folgt ein Schritt 114, in dem die Ist-Helligkeit des Zielbilds geprüft wird. Stimmt die Ist-Helligkeit mit der Zielhelligkeit überein, wird das Zielbild verwendet. Stimmt die Ist-Helligkeit jedoch nicht mit der Zielhelligkeit überein, so werden die Schritte 110 und 112 wiederholt, bevorzugt so oft, bis eine Übereinstimmung von Ist-Helligkeit und Zielhelligkeit vorliegt.

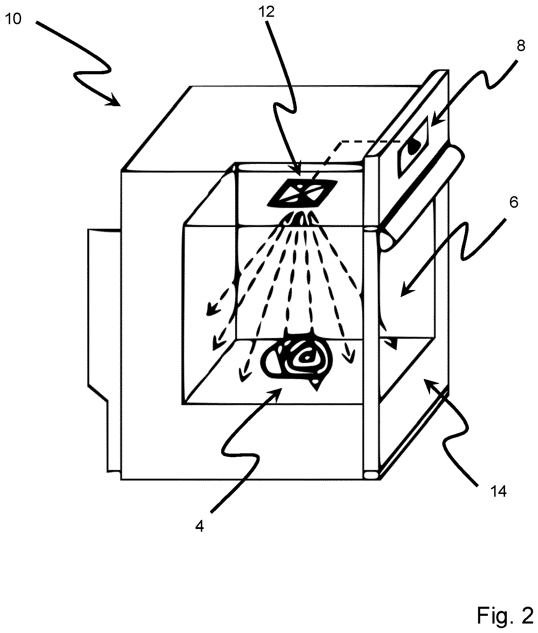

In Figur 2 ist ein Gargerät 10, etwa ein Backofen, gemäß einer Ausführungsform schematisch gezeigt. Das Gargerät 10 weist einen Garraum 6 auf, der mit einer Tür 14 verschließbar ist. Eine Kamera 12 ist vorgesehen, um Gargüter aufzunehmen. Die Kamera 12 muss nicht zwangsläufig wie hier gezeigt in der Garraumdecke angeordnet sein, sondern kann grundsätzlich beliebig angeordnet sein, so dass Gargüter von allen Seiten aufgenommen werden können.

Hier ist der Einfachheit halber gezeigt, dass ein Gargut 4, wie etwa ein Stück Fleisch, auf dem Garraumboden liegt. Üblicherweise weist das Gargerät jedoch eine Halterung für einen Gargutträger wie ein Backblech oder ein Rost auf, so dass Gargüter dann auf dem (hier nicht gezeigten) Gargutträger angeordnet werden. Das Gargerät 10 weist eine Steuereinheit 8 auf, die mit der Kamera 12 verbunden und dazu eingerichtet ist, ein Verfahren zur Belichtungsregelung wie in dieser Beschreibung offenbart, auszuführen.

In Figur 3 sind Teilschritte einer Ausführungsform gezeigt, betreffend das Segmentieren in Gargut-Flächenanteile und Nicht-Gargut-Flächenanteile. Im oberen Teil der Figur ist schematisch ein Gargutträger 2 mit einem Gargut 4 gezeigt. Auf das von der Kamera aufgenommene Bild wird ein Kantenoperator angewendet. Als Kantenoperator können an sich bekannte Verfahren eingesetzt werden, wie der Sobel-, Scharr-, Laplace-, Prewitt-, Roberts-, Kirsch-, Canny-, Marr-Hildreht-Algorithmus, Kontrastverstärker, aktive Kontur oder dergleichen. In einer einfachen Variante macht man sich dabei die Kontrastunterschiede zunutze, die an Kanten in der Regel am größten sind.

Unter Anwendung eines Kantenoperators kann ein Bild gewonnen werden die in der unteren Reihe links (hier gefüllt dargestellt). Die Kanten werden in einem nächsten Schritt weichgezeichnet, so dass ein Bild wie in der unteren Reihe mittig gewonnen wird. Im abschließenden Schritt wird ein Dilatationsoperator angewendet, um ein Bild zu gewinnen wir in der unteren Reihe rechts. Aus diesem Bild kann nun die Belichtungsmaske erstellt werden, wobei die hier schwarz dargestellten Bereiche Gargut-Flächenanteilen, und die weiß dargestellten Bereich Nicht-Gargut-Flächenanteilen entsprechen.

## Patentansprüche

1. Verfahren zur Belichtungsregelung in einem Gargerät mit einer integrierten Kamera, umfassend:
- Aufnehmen eines Startbilds mit einer vorgegebenen Grundbelichtungszeit;
- Segmentieren des Startbilds in Gargut-Flächenanteile und Nicht-Gargut-Flächenanteile;
- Erstellen einer Belichtungs-Maske für die Gargut-Flächenanteile, welche die Nicht-Gargut-Flächenanteile ausblendet;
- Anpassen der Belichtungszeit unter Verwendung der Belichtungs-Maske, so dass eine vorgegebene Zielhelligkeit der Gargut-Flächenanteile erreicht wird; und
- Aufnehmen eines Zielbilds mit der angepassten Belichtungszeit;
wobei das Segmentieren des Startbilds in Gargut-Flächenanteile und Nicht-Gargut-Flächenanteile auf einem oder mehreren der folgenden Schritte beruht:
- Randerkennung, um einfach zusammenhängende Gebiete zu erkennen;
- Berücksichtigung von Farbwerten, wobei Gebiete ähnlicher Farbe bevorzugt als zusammenhängende Gebiete eingestuft werden;
- Berücksichtigung einfach zusammenhängender Gebiete, wobei einfach zusammenhängende Gebiete bevorzugt als Gargut-Flächenanteile eingestuft werden und nicht einfach zusammenhängende Gebiete bevorzugt als Nicht-Gargut-Flächenanteile eingestuft werden;
- Berücksichtigung des Abstands von Gebieten von der Mitte und/oder dem Rand des Gargutträgers, wobei Gebiete in der Mitte bevorzugt als Gargut-Flächenanteile eingestuft werden und Flächenanteile am Rand bevorzugt als Nicht-Gargut-Flächenanteile eingestuft werden;
- Berücksichtigen der Form und Farbe bekannter Gargutträger, wobei Gebiete mit dieser Form und Farbe bevorzugt als Nicht-Gargut-Flächenanteile eingestuft werden;
- Erkennung der Struktur des Gargutes und Unterscheidung zu Nicht-Gargut-Flächeninhalten;
und wobei das Anpassen der Belichtungszeit umfasst:
- Ermitteln eines ersten Durchschnittshelligkeitswerts der Bildpunkte der Gargut-Flächenanteile; und
- Ermitteln, abhängig von der Grundbelichtungszeit und dem ersten Durchschnittshelligkeitswert, der Belichtungszeit für die vorgegebene Zielhelligkeit.

2. Verfahren nach Anspruch 1, wobei die Bildpunkte der Gargut-Flächenanteile, deren Helligkeit außerhalb eines vorgegebenen Helligkeitsbereich liegt, beim Ermitteln des ersten Durchschnittshelligkeitswerts nicht berücksichtigt werden.

3. Verfahren nach Anspruch 1 oder 2, weiter umfassend:
- Ermitteln eines zweiten Durchschnittshelligkeitswerts der Bildpunkte der Nicht-Gargut-Flächenanteile; und
- Vergleichen des ersten mit dem zweiten Durchschnittshelligkeitswert und Vorgeben der Zielhelligkeit in Abhängigkeit davon.

4. Verfahren nach Anspruch 1 oder 2, weiter umfassend:
- Vorgeben der Zielhelligkeit in Abhängigkeit von dem ersten Durchschnittshelligkeitswert.

5. Verfahren nach einem der vorhergehenden Ansprüche, wobei die Schritte des Anpassens der Belichtungszeit und Aufnehmens eines Zielbilds wiederholt werden, sofern die Ist-Helligkeit der Gargut-Flächenanteile des Zielbilds um mehr als einen Schwellenwert von der Zielhelligkeit abweicht.

6. Gargerät, umfassend:
- einen Garraum;
- eine integrierte Kamera, die dazu eingerichtet ist, Bilder vom Garraum aufzunehmen; und
- eine Steuereinheit, die mit der Kamera verbunden und dazu eingerichtet ist, ein Verfahren nach einem der Ansprüche 1 bis 5 auszuführen.

7. Gargerät nach Anspruch 6, wobei der Garraum mit einer Tür verschließbar ist und die Steuereinheit weiter dazu eingerichtet ist, das Verfahren in Reaktion auf ein Schließen der Tür auszuführen.

8. Gargerät nach Anspruch 6 oder7, wobei die Steuereinheit weiter dazu eingerichtet ist, in Reaktion auf den Start eines Garprogramms die angepasste Belichtungszeit zu speichern und während der Ausführung des Garprogramms die gespeicherte Belichtungszeit für weitere Bilder zu verwenden.

## Claims

1. Method for controlling exposure in a cooking appliance that has an integrated camera, the method comprising:
- recording a start image with a specified basic exposure time;
- segmenting the start image into food surface portions and non-food surface portions;
- creating an exposure mask for the food surface portions, which exposure mask hides the non-food surface portions;
- adjusting the exposure time using the exposure mask, so that a specified target brightness of the food surface portions is achieved; and
- recording a target image with the adjusted exposure time;
wherein the segmentation of the start image into food surface portions and non-food surface portions involves one or more of the following steps:
- edge detection, for detecting singly contiguous regions;
- taking into account colour values, wherein regions of similar colour are preferably classified as contiguous regions;
- taking into account singly contiguous regions, wherein singly contiguous regions are preferably classified as food surface portions and non-singly contiguous regions are preferably classified as non-food surface portions;
- taking into account the distance of regions from the centre and/or the edge of the food support, wherein regions in the centre are preferably classified as food surface portions and surface portions at the edge are preferably classified as non-food surface portions;
- taking into account the shape and colour of known food carriers, wherein regions having this shape and colour are preferably classified as non-food surface portions;
- detecting the structure of the food and distinguishing from non-food surface content;
and wherein adjusting the exposure time comprises:
- determining a first average brightness value of the pixels of the food surface portions; and
- determining, on the basis of the basic exposure time and the first average brightness value, the exposure time for the specified target brightness.

2. Method according to claim 1, wherein the pixels of the food surface portions of which the brightness is outside a specified brightness range is not taken into account when determining the first average brightness value.

3. Method according to either claim 1 or claim 2, further comprising:
- determining a second average brightness value of the pixels of the non-food surface portions; and
- comparing the first with the second average brightness value and specifying the target brightness on the basis thereof.

4. Method according to either claim 1 or claim 2, further comprising:
- specifying the target brightness on the basis of the first average brightness value.

5. Method according to any of the preceding claims, wherein the steps of adapting the exposure time and recording a target image are repeated if the actual brightness of the food surface portions of the target image deviates by more than one threshold value from the target brightness.

6. Cooking appliance, comprising:
- a cooking chamber;
- an integrated camera configured to record images of the cooking chamber; and
- a control unit, which is connected to the camera and configured to carry out a method according to any of claims 1 to 5.

7. Cooking appliance according to claim 6, wherein the cooking chamber can be closed by a door and the control unit is further configured to carry out the method in response to the door being closed.

8. Cooking appliance according to either claim 6 or claim 7, wherein the control unit is further configured to store the adjusted exposure time in response to the start of a cooking program and to use the stored exposure time for further images when the cooking program is being carried out.

## Revendications

1. Procédé permettant le réglage de l'exposition dans un appareil de cuisson comportant une caméra intégrée, comprenant :
- la prise d'une image de départ avec un temps d'exposition de base prédéfini ;
- la segmentation de l'image de départ en parties de surface de produits destinés à la cuisson et en parties de surface de produits non destinés à la cuisson ;
- la création d'un masque d'exposition pour les parties de surface de produits destinés à la cuisson, lequel masque les parties de surface de produits non destinés à la cuisson ;
- l'ajustement du temps d'exposition à l'aide du masque d'exposition de sorte qu'une luminosité cible prédéfinie des parties de surface de produits destinés à la cuisson est obtenue ; et
- la prise d'une image cible avec le temps d'exposition ajusté ;
dans lequel la segmentation de l'image de départ en parties de surface de produits destinés à la cuisson et en parties de surface de produits non destinés à la cuisson repose sur une ou plusieurs des étapes suivantes :
- détection de bords pour identifier des régions simplement contiguës ;
- prise en compte de valeurs de couleur, des régions de couleurs similaires étant de préférence classées en tant que régions contiguës ;
- prise en compte de régions simplement contiguës, des régions simplement contiguës étant de préférence classées en tant que parties de surface de produits destinés à la cuisson et des régions n'étant pas simplement contiguës étant de préférence classées en tant que parties de surface de produits non destinés à la cuisson ;
- prise en compte de la distance de régions par rapport au centre et/ou au bord du support de produits destinés à la cuisson, des régions au centre étant de préférence classées en tant que parties de surface de produits destinés à la cuisson et des parties de surface au niveau du bord étant de préférence classées en tant que parties de surface de produits non destinés à la cuisson ;
- prise en compte de la forme et de la couleur de supports de produits destinés à la cuisson connus, des régions comportant lesdites forme et couleur étant de préférence classées en tant que parties de surface de produits non destinés à la cuisson ;
- détection de la structure des produits destinés à la cuisson et distinction par rapport à des parties de surface de produits non destinés à la cuisson ;
et dans lequel l'ajustement du temps d'exposition comprend :
- la détermination d'une première valeur de luminosité moyenne des pixels des parties de surface de produits destinés à la cuisson ; et
- la détermination, en fonction du temps d'exposition de base et de la première valeur de luminosité moyenne, du temps d'exposition pour la luminosité cible prédéfinie.

2. Procédé selon la revendication 1, dans lequel les pixels des parties de surface de produits destinés à la cuisson, dont la luminosité se situe en dehors d'une plage de luminosité prédéfinie, ne sont pas pris en compte lors de la détermination de la première valeur de luminosité moyenne.

3. Procédé selon la revendication 1 ou 2, comprenant en outre :
- la détermination d'une seconde valeur de luminosité moyenne des pixels des parties de surface de produits non destinés à la cuisson ; et
- la comparaison de la première valeur de luminosité moyenne avec la seconde valeur de luminosité moyenne et la spécification de la luminosité cible en fonction de ladite comparaison.

4. Procédé selon la revendication 1 ou 2, comprenant en outre :
- la spécification de la luminosité cible en fonction de la première valeur de luminosité moyenne.

5. Procédé selon l'une des revendications précédentes, dans lequel les étapes d'ajustement du temps d'exposition et de prise d'une image cible sont répétées si la luminosité réelle des parties de surface de produits destinés à la cuisson de l'image cible diffère de plus d'une valeur seuil de la luminosité cible.

6. Appareil de cuisson, comprenant :
- un espace de cuisson ;
- une caméra intégrée configurée pour prendre des images de l'espace de cuisson ; et
- une unité de commande connectée à la caméra et configurée pour exécuter un procédé selon l'une des revendications 1 à 5.

7. Appareil de cuisson selon la revendication 6, dans lequel l'espace de cuisson peut être fermé par une porte et l'unité de commande est en outre configurée pour exécuter le procédé en réponse à une fermeture de la porte.

8. Appareil de cuisson selon la revendication 6 ou 7, dans lequel l'unité de commande est en outre configurée pour stocker le temps d'exposition ajusté en réponse au démarrage d'un programme de cuisson et pour utiliser le temps d'exposition stocké pour d'autres images pendant l'exécution du programme de cuisson.
